# EUROPÄISCHE PATENTSCHRIFT

(11) **EP 2 617 016 B1**
(45) Veröffentlichungstag und Bekanntmachung des Hinweises auf die Patenterteilung: **27.07.2016**
(21) Anmeldenummer: 11757779.1
(22) Anmeldetag: 15.09.2011
(51) Int. Cl.: G07D 7/00, G07D 11/00, G06Q 40/00

(54) **VERFAHREN FÜR DIE BEARBEITUNG VON BANKNOTEN**
METHOD OF BANKNOTES PROCESSING
PROCÉDÉ DE TRAITEMENT DE BILLETS DE BANQUE

(30) Priorität: 17.09.2010 DE 102010045879
(43) Veröffentlichungstag der Anmeldung: 24.07.2013
(73) Patentinhaber: Giesecke & Devrient GmbH, 81677 München (DE)
(72) Erfinder: HOLL, Norbert, 82110 Germering (DE); SCHMITZ, Jürgen, 83607 Holzkirchen (DE); STEIN, Dieter, 83607 Holzkirchen (DE)
(86) Internationale Anmeldenummer: PCT/EP2011/004643
(87) Internationale Veröffentlichungsnummer: WO 2012/034703

(56) Entgegenhaltungen:
- EP-A1- 1 418 549
- EP-A2- 1 467 327
- DE-A1-102004 049 209
- US-A1- 2008 219 543
- "Rahmenvereinbarung für den Betrieb von kombinierten Ein- und Auszahlungsautomaten durch Kreditinstitute und andere Institute im Euro-Währungsgebiet, zu deren Aufgaben der Umgang mit Banknoten und deren Ausgabe an die Bevölkerung gehören", INTERNET CITATION, 24. Mai 2002 (2002-05-24), XP002335435, Gefunden im Internet: URL:http://www.ecb.int/pub/pdf/other/cashr ecyclingtermsde.pdf [gefunden am 2005-07-11]

## Beschreibung

Die Erfindung betrifft ein Verfahren für die Bearbeitung von Banknoten.

Für die Bearbeitung von Banknoten, ist es vorgesehen, dass die Banknoten als lose Stapel in einen Eingabebereich eingegeben werden und von einem Vereinzeler vereinzelt werden. Die einzelnen Banknoten werden vom Vereinzeler an ein Transportsystem übergeben und der Bearbeitung zugeführt. Übliche Formen der Bearbeitung bei Banknoten sind die Annahme, Prüfung und Erkennung der Banknoten mittels Sensoren, wobei Echtheit, Art (Währung, Denomination), Zustand (Verschmutzung, Beschädigung) usw. festgestellt werden. Basierend auf den Ergebnissen der Prüfung und Erkennung werden die Banknoten nachfolgend z. B. sortiert, gestapelt, gebündelt, vernichtet usw.

Zur Überprüfung der Echtheit der Banknoten werden insbesondere auch Seriennummern der Banknoten zu berücksichtigt. Gefälschte Banknoten werden häufig kopiert, weshalb die gefälschten Banknoten häufig eine oder einige wenige Seriennummern aufweisen. Werden Fälschungen erkannt, wird die Seriennummer erfasst und gespeichert. Bei einer späteren Überprüfung von Banknoten werden deren Seriennummern erfasst und mit den gespeicherten Seriennummern der bekannten Fälschungen verglichen. Wird eine Übereinstimmung ermittelt, handelt es sich bei der geprüften Banknote um eine Fälschung. Derartige Verfahren sind z. B. aus DE 10 2004 049 209 A1, US 2008/0219543 A1, EP 1418 549 A1 und EP 1467 327 A2 bekannt.

Davon ausgehend ist es die Aufgabe der vorliegenden Erfindung, ein Verfahren für die Bearbeitung von Banknoten anzugeben, welches es ohne aufwendige Maßnahmen ermöglicht, die Bearbeitung der Banknoten mittels ihrer Seriennummern flexibel zu steuern.

Die Lösung dieser Aufgabe ergibt sich aus den Merkmalen des unabhängigen Anspruchs. Weiterbildungen sind Gegenstand der Unteransprüche.

Die Erfindung geht von einem Verfahren für die Bearbeitung von Banknoten, bei dem Seriennummern der zu bearbeitenden Banknoten ermittelt und mit gespeicherten Seriennummern verglichen werden, um die Bearbeitung der Banknoten zu steuern, aus, mit einer Festlegung mehrerer Klassen, die jeweils mindestens eine Eigenschaft von Banknoten charakterisieren, einer Zuordnung mindestens einer der Klassen zu mehreren Seriennummern, wobei ein Bereich für die mehreren Seriennummern durch Verwendung von Platzhaltern definiert wird, um der mit der jeweiligen Seriennummer aus dem Bereich versehenen Banknote mindestens eine Eigenschaft zuzuordnen, einer Speicherung des Bereichs der mehreren Seriennummern sowie der zugeordneten Klasse oder Klassen, und einer Steuerung der Bearbeitung der Banknoten mittels der gespeicherten, den mehreren Seriennummern des Bereichs zugeordneten Klassen.

Der Vorteil der erfindungsgemäßen Lösung besteht darin, dass für die Bearbeitung von Banknoten benötigte Informationen frei, und den jeweils für die Bearbeitung der Banknoten zu beachtenden Erfordernissen einfach anpassbar, bestimmten Banknoten über deren Seriennummer zugeordnet werden können. Dadurch kann die Bearbeitung von Banknoten für jeden Bedarfsfall flexibel und einfach in gewünschter Weise beeinflusst werden, da eine Vielzahl von bekannten Seriennummern gleichzeitig berücksichtigt werden kann.

Bei vorteilhaften Weiterbildungen ist es vorgesehen, für die jeweiligen Klassen zulässige Bereiche zu definieren, insbesondere durch die Verwendung von Platzhaltern.

Dies erlaubt eine weitere Flexibilisierung und Vereinfachung der Bearbeitung von Banknoten, da dies auf einfache Weise die Berücksichtigung einer Vielzahl von Klassen erlaubt.

Weitere Ausführungsformen und Vorteile der Erfindung werden im Folgenden anhand der Figuren sowie deren Beschreibung erläutert.

Es zeigen
- Figur 1: eine beispielhafte Ausführungsform einer Banknotenbearbeitungsmaschine,
- Figur 2: eine Ausführungsform einer Tabelle für die Bearbeitung von Banknoten mittels Seriennummern, und
- Figur 3: eine beispielhafte Ausführungsform eines Netzwerks von Banknotenbearbeitungsmaschinen, wie in Figur 1 dargestellt.

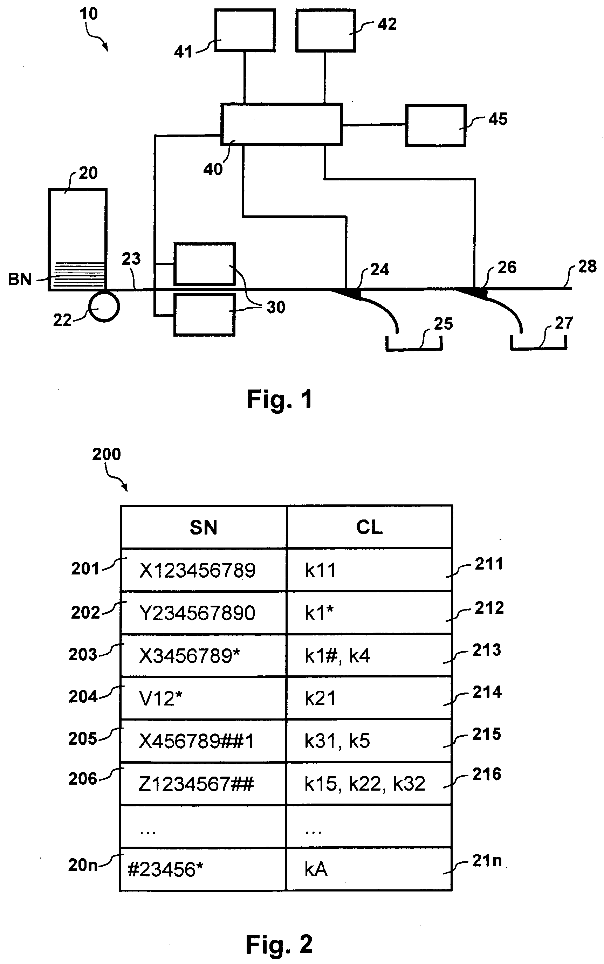

Figur 1 zeigt eine schematische Darstellung eines prinzipiellen Aufbaus einer beispielhaften Ausführungsform einer Banknotenbearbeitungsmaschine 10, die für das Bearbeiten von Banknoten geeignet ist, insbesondere für das Prüfen und Sortieren.

Die Banknotenbearbeitungsmaschine 10 weist ein Eingabefach 20 für die Eingabe von zu bearbeitenden Banknoten BN auf, in welches ein Vereinzeler 22 eingreift. Der Vereinzeler 22 erfasst jeweils eine der zu bearbeitenden Banknoten BN und übergibt die einzelne Banknote einem Transportsystem 23, welches die einzelne Banknote durch eine Sensoreinrichtung 30 transportiert. In der Sensoreinrichtung 30 werden Merkmale jeder einzelnen Banknote erfasst, die beispielsweise für die Beurteilung der Echtheit, der Art (Währung, Denomination), des Zustands usw. der Banknote relevant sind. Derartige Merkmale können beispielsweise mechanisch, akustisch, optisch, elektrisch und/ oder magnetisch erfasst werden. Bekannte Echtheitsmerkmale umfassen beispielsweise Druckfarben mit besonderen optischen und/ oder magnetischen Eigenschaften, metallische oder magnetische Sicherheitsfäden, die Verwendung von aufhellerfreiem Banknotenpapier, in einem elektrischen Schaltkreis enthaltene Informationen usw. Die Art der Banknote wird z. B. durch ihre Größe, Druckmuster, Farben usw. festgelegt, wohingegen der Zustand der Banknote beispielsweise aus dem optischen Erscheinungsbild (Verschmutzung) abgeleitet werden kann. Des Weiteren erfasst die Sensoreinrichtung 30 ein Abbild oder Teilbereiche des Abbilds der jeweiligen Banknote. Das Abbild oder zumindest ein Teilbereich des Abbilds enthält eine Seriennummer der jeweiligen Banknote. Abbilder oder Teilbereiche des Abbilds können von einer oder von beiden Seiten der jeweiligen Banknote erfasst werden. Die von der Sensoreinrichtung 30 erfassten Merkmale und Abbilder oder entsprechende Daten der Sensoreinrichtung 30 werden an eine Steuereinrichtung 40 übergeben.

Von der Steuereinrichtung 40 werden die Daten der erfassten Merkmale mit Vergleichsdaten verglichen, welche die Erkennung von echten bzw. gefälschten und/oder fälschungsverdächtigen Banknoten, die Art der Banknoten, den Zustand der Banknoten usw. ermöglichen. Die Vergleichsdaten sowie für den Betrieb der Banknotenbearbeitungsmaschine 10 erforderliche Programme liegen als Software vor und sind in der Steuereinrichtung 40 bzw. einem der Steuereinrichtung 40 zugeordneten, nichtflüchtigen Speicher 41 gespeichert. Der nichtflüchtige Speicher 41 kann z. B. von einem EEPROM-, einem Flash- oder einem Festplatten-Speicher gebildet werden. Weiterhin kann ein nicht dargestellter Arbeitsspeicher mit der Steuereinrichtung 40 verbunden sein, der von der Steuereinrichtung 40 für die Ausführung der Software verwendet wird. Zudem werden die Abbilder oder Teilbereiche der Abbilder der der jeweiligen Banknote von der Steuereinrichtung 40 ausgewertet, um die Seriennummer der jeweiligen Banknote als numerische oder alphanumerische Zeichen abzuleiten, die im nichtflüchtigen Speicher 41 gespeichert werden können. Die in den Abbildern oder Teilbereichen der Abbilder enthaltene Seriennummer wird z. B. mit einem OCR-Verfahren abgeleitet. Zur Überprüfung der jeweiligen Banknote vergleicht die Steuereinrichtung 40 die abgeleiteten Seriennummern mit z. B. im nichtflüchtigen Speicher 41 gespeicherten Seriennummern. Die für den Vergleich verwendeten Daten bzw. Seriennummern können beispielsweise als Tabelle gespeichert sein.

Anhand der von der Steuereinrichtung 40 durchgeführten Überprüfung der jeweiligen Banknote werden im Transportsystem 23 angeordnete Weichen 24, 26 angesteuert, um beispielsweise gefälschte und/oder fälschungsverdächtige Banknoten in einem Ausgabefach 25 abzulegen, wohingegen als echt eingestufte Banknoten in einem anderen Ausgabefach 27 abgelegt werden können. Das Transportsystem 23 kann darüber hinaus fortgesetzt sein, so dass die Banknoten einer weiteren Bearbeitung 28 zugeführt werden können, z. B. weiteren Ausgabefächern, einem Safe oder Kassetten, in welchen die Banknoten sicher aufbewahrt und transportiert werden können, einem Schredder usw.

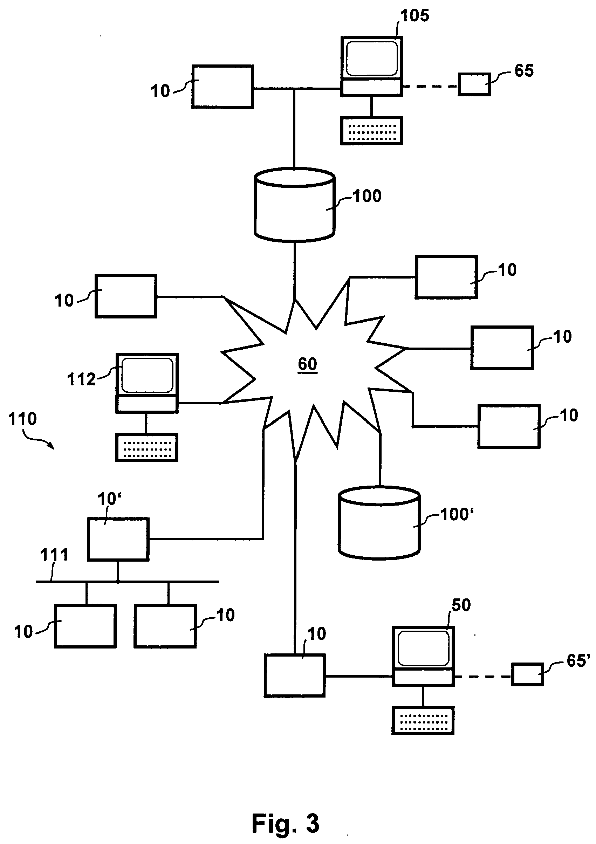

Zur Steuerung der Banknotenbearbeitungsmaschine 10 durch eine Bedienperson ist eine Ein-/ Ausgabeeinrichtung 45 mit der Steuereinrichtung 40 verbunden, um beispielsweise bestimmte Bearbeitungsmodi auswählen zu können, beziehungsweise die Bedienperson über die Bearbeitung der Banknoten BN zu informieren. Dazu können eine Tastatur und eine Anzeige vorhanden sein. Ebenso ist es möglich, dass eine berührungsempfindliche Anzeige (Touch-Screen) verwendet wird oder eine beliebige Kombination der genannten Mittel. Weiterhin kann ein Drucker vorgesehen sein, um z. B. Abrechnungsdaten von Banknoten ausdrucken zu können, die mit der Banknotenbearbeitungsmaschine 11 bearbeitet wurden. Weiterhin kann die Ein-/ Ausgabeeinrichtung 45 einen Kartenleser aufweisen, der geeignet ist Karten mit Magnetstreifen und/oder Chip zu lesen. Derartige Karten können beispielsweise dazu verwendet werden, die Bedienperson der Banknotenbearbeitungsmaschine 11 zu identifizieren, um beispielsweise ein bestimmtes Konto anzugeben, auf welches der Gesamtbetrag der zu bearbeitenden Banknoten gut geschrieben werden soll. Es kann auch vorgesehen sein, dass die Bedienperson zusätzlich ein geheimes Passwort eingeben muss, um die Identifizierung vornehmen zu können. Zusätzlich kann die Banknotenbearbeitungsmaschine 10 mit einem Computer 50 (Figur 3) verbunden sein, der einer Bedienperson dazu dient, die Banknotenbearbeitungsmaschine 10 zu steuern.

Weiterhin kann eine Schnittstelle 42 vorhanden sein, welche den Anschluss an ein Netzwerk für Kommunikationszwecke erlaubt. Dazu kann die Schnittstelle 42 z. B. als Modem, Netzwerkanschluss, Internetanschluss usw. ausgestaltet sein.

Neben der beschriebenen Banknotenbearbeitungsmaschine 10, die insbesondere für das Prüfen und Sortieren geeignet ist, können auch alle anderen Arten von Banknotenbearbeitungsmaschinen verwendet werden, die über Sensoren verfügen, die eine Ermittlung von Seriennummern erlauben. Dies kann insbesondere auch ein automatischer Schalter für die Einzahlung von Banknoten sein.

Neben der beschriebenen Ermittlung von Seriennummern durch Ableitung aus einem Abbild oder Teilabbild von Banknoten, ist jede andere mögliche Ermittlung der Seriennummern geeignet, z. B. das Auslesen einer Seriennummer aus einem Schaltkreis der Banknoten, beispielsweise einem RFID-Schaltkreis.

Wie oben erwähnt, werden die für die Überprüfung ermittelten Seriennummern der Banknoten mit bekannten, im nichtflüchtigen Speicher 41 der Banknotenbearbeitungsmaschine 10 gespeicherten Seriennummern verglichen. Daten über die bekannten Seriennummern SN sind beispielsweise in einer wie in Figur 2 dargestellten Liste oder Tabelle 200 gespeichert, wobei jeder bekannten Seriennummer SN eine oder mehrere Klassen oder Kategorien CL zugeordnet sind, die bestimmte Eigenschaften der Banknoten beschreiben. Die weitere Bearbeitung kann entsprechend der zugeordneten Klasse oder Klassen CL gesteuert werden.

Beispielsweise ist einer ersten Seriennummer 201 eine Klasse 211 zugeordnet. Die Klasse 211 ist beispielsweise als "k11" bezeichnet. Die Klasse "k11" bedeutet dabei, dass die zugeordnete Seriennummern "X123456789", bzw. die damit gekennzeichnete Banknote, einen sehr guten Gesamtzustand aufweist, der es beispielsweise erlaubt, die Banknote wieder in Umlauf zu bringen und dazu einen Geldausgabeautomaten zu verwenden. Ganz allgemein kann die Klasse "k1x" den Zustand der Banknote beschreiben. Die Klasse "k11" bedeutet beispielsweise, wie zuvor beschrieben, einen sehr guten Gesamtzustand der Banknote. Eine Klasse "k12" kann einen guten Gesamtzustand beschreiben, d. h. Banknoten die umlauffähig sind, jedoch nicht den hohen Anforderungen für eine Ausgabe mittels Geldausgabeautomaten genügen. Eine Klasse "k13" kann einen Gesamtzustand mit leichten Gebrauchsspuren beschreiben, d. h. Banknoten, die z. B. verschmutzt sind. Eine Klasse "k14" kann einen Gesamtzustand mit stärkeren Gebrauchsspuren beschreiben, d. h. Banknoten, die z. B. verschmutzt sind und Falten oder Eselsohren aufweisen. Eine Klasse "k15" kann einen Gesamtzustand mit starken Gebrauchsspuren beschreiben, d. h. Banknoten, die z. B. Beschädigungen wie Risse aufweisen oder bei denen Teile fehlen. Über eine entsprechende Staffelung ist die Festlegung und Beschreibung weiter abgestufter Eigenschaften der Banknote möglich. Neben der beschriebenen Abstufung mittels zwei Ziffern "k11" ist auch die Verwendung von nur einer Ziffer, z. B. "k1", oder mehr als zwei Ziffern, z. B. "k111", möglich. Neben der Verwendung von Ziffern können auch andere Zeichen, z. B. alphanumerische Zeichen, verwendet werden.

Bei der Überprüfung von Banknoten in der Banknotenbearbeitungsmaschine 10 werden die ermittelten Seriennummern der Banknoten von der Steuereinrichtung 40 mit den in der Tabelle 200 enthaltenen Seriennummern SN verglichen. Wird beim Vergleich beispielsweise die Seriennummer 201 erkannt, kann die zugeordnete Klasse 211 für die weitere Bearbeitung verwendet werden. Beispielsweise wird die Banknote, da der ihr zugewiesene Zustand der Klasse "k11" entspricht, d. h. sehr gut ist, gesteuert durch die Steuereinrichtung 40, in das Ausgabefach 27 transportiert und dort abgelegt.

Beispielsweise ist einer zweiten Seriennummer 202 eine Klasse 212 zugeordnet. Die Klasse 212 ist beispielsweise als "k1*" bezeichnet. Die Klasse k1*" bedeutet dabei, dass die zugeordnete Seriennummer X234567890, bzw. die damit gekennzeichnete Banknote, einen beliebigen Zustand aufweisen kann. Entsprechend der obigen Erläuterung, kann der Zustand der Banknote sehr gut "k11", gut "k12", weniger gut "k13" usw. sein. Dies bedeutet, dass mittels entsprechender Zeichen, sogenannter Platzhalter oder Wildcards, z. B. dem Zeichen "*", einer Seriennummer SN beliebige Klassen CL oder Bereiche von Klassen CL zugeordnet werden können. Das Zeichen "*" als Platzhalter kann die Bedeutung haben, dass anstelle des Zeichens "*" kein oder beliebig viele Ziffern oder alphanumerische Zeichen stehen können.

Bei der Überprüfung von Banknoten in der Banknotenbearbeitungsmaschine 10 werden die ermittelten Seriennummern der Banknoten von der Steuereinrichtung 40 mit den in der Tabelle 200 enthaltenen Seriennummern SN verglichen. Wird beim Vergleich beispielsweise die Seriennummer 202 erkannt, kann die zugeordnete Klasse 212 für die weitere Bearbeitung verwendet werden. Beispielsweise wird die Banknote, da der ihr zugewiesene Zustand der Klasse "k1*" entspricht, d. h. einen beliebigen, nicht näher definierten Zustand aufweisen kann, durch die Steuereinrichtung 40 bewertet, wozu die Steuereinrichtung 40 die oben beschriebenen, von der Sensoreinrichtung 30 erfassten Merkmale der Banknote auswertet. Die weitere Bearbeitung kann dann abhängig von dieser Bewertung erfolgen. Es kann auch vorgesehen sein, dass die von der Steuereinrichtung 40 aus den Signalen bzw. Daten der Sensoreinrichtung 30 abgeleitete Information über den Zustand der jeweiligen Banknote deren Seriennummer zugeordnet wird. Im vorliegenden Beispiel wird dann der Klasse 212 der Seriennummer 202 statt des nicht näher definierten Zustands "k1*" beispielsweise der Zustand "k12" zugeordnet, falls die Überprüfung ergab, dass die Banknote einen guten Zustand aufweist.

Beispielsweise ist einer dritten Seriennummer 203 eine Klasse 213 zugeordnet. Die Klasse 213 ist beispielsweise als "k1#, k4" bezeichnet. Dies bedeutet, dass der Seriennummer "X3456789*" die Klasse "k1#" und die Klasse "k4" zugeordnet sind. Die Klasse "k1#" kann dabei die oben beschriebene Charakterisierung des Zustands der Banknote betreffen. Das Zeichen "#" wird als Platzhalter eingesetzt und bedeutet beispielsweise, dass anstelle des Zeichens "#" eine oder keine Ziffer oder ein oder kein alphanumerisches Zeichen stehen kann. Die Klasse "k4" kann beispielsweise Banknoten kennzeichnen, die Bestandteil von geraubtem oder erpresstem Geld sind. Alle Banknoten die eine Seriennummer aufweisen die, mit "X3456789" beginnt, werden entsprechend als Banknoten erkannt, die geraubt oder erpresst wurden, da die Seriennummer 203 "X3456789*" ein Zeichen "*" enthält, das als Platzhalter verwendet wird. Entsprechend der obigen Erläuterung kann das Zeichen "*" für kein oder beliebig viele Ziffern oder alphanumerische Zeichen stehen.

Bei der Überprüfung von Banknoten in der Banknotenbearbeitungsmaschine 10 werden die ermittelten Seriennummern der Banknoten von der Steuereinrichtung 40 mit den in der Tabelle 200 enthaltenen Seriennummern SN verglichen. Wird beim Vergleich beispielsweise die Seriennummer 203 erkannt, d. h. eine Seriennummer, die mit der Zeichenfolge "X3456789" beginnt, kann die zugeordnete Klasse 213 für die weitere Bearbeitung verwendet werden. Beispielsweise wird die Banknote, da sie durch die Klasse "k4" als Raub- oder Erpressergeld gekennzeichnet ist, über die Fortsetzung 28 des Transportsystems 23 zu einem besonderen, nicht dargestellten Ausgabefach transportiert. Zusätzlich kann die Steuereinrichtung 40 ein Warnsignal erzeugen und beispielsweise auf der Ein-/ Ausgabeeinrichtung 45 darstellen. Es ist auch möglich, die Bearbeitung bei der Erkennung von Raub- oder Erpressergeld anzuhalten. Zusätzlich ist der Seriennummer 203 die Klasse "k1#" zugewiesen, d. h. sie kann einen beliebigen, nicht näher definierten Zustand aufweisen.

Beispielsweise ist einer vierten Seriennummer 204 eine Klasse 214 zugeordnet. Die Klasse 214 ist beispielsweise als "k21" bezeichnet. Dies bedeutet, dass der Seriennummer "V12*" die Klasse "k21" zugeordnet ist. Die Klasse "k21" kann ein bestimmtes Land, eine Druckstätte oder einen Herkunftsort der Banknoten beschreiben. Alle Banknoten die eine Seriennummer aufweisen, die mit "V12" beginnt, werden entsprechend als Banknoten erkannt, die aus dem bestimmten Land, vor der Druckstätte oder dem Herkunftsort stammen. Entsprechend der obigen Erläuterung kann das Zeichen "*" für kein oder beliebig viele Ziffern oder alphanumerische Zeichen stehen.

Bei der Überprüfung von Banknoten in der Banknotenbearbeitungsmaschine 10 werden die ermittelten Seriennummern der Banknoten von der Steuereinrichtung 40 mit den in der Tabelle 200 enthaltenen Seriennummern SN verglichen. Wird beim Vergleich beispielsweise die Seriennummer 204 erkannt, d. h. eine Seriennummer, die mit der Zeichenfolge "V12" beginnt, kann die zugeordnete Klasse 214 für die weitere Bearbeitung verwendet werden. Beispielsweise wird die Banknote, da sie durch die Klasse "k21" als von einem bestimmten Ort stammend gekennzeichnet ist, in das Ausgabefach 27 transportiert, in welches beispielsweise nur Banknoten transportiert werden, die aus dem bestimmten Land stammen.

Beispielsweise ist einer fünften Seriennummer 205 eine Klasse 215 zugeordnet. Die Klasse 215 ist beispielsweise als "k31" und "k5" bezeichnet. Dies bedeutet, dass allen Seriennummern "X456789##1" die Klassen "k31" und "k5" zugeordnet sind, d. h. allen Banknoten deren Seriennummer der bekannten Seriennummer 205 entspricht, wobei die zweit- und drittletzte Stelle der Seriennummer beliebig sein kann. Die Klasse "k31" kann eine bestimmte Serie oder Emission der entsprechenden Banknote beschreiben, also eine bestimmte Ausgabe einer Banknote einer bestimmten Währung und Denomination. Die Klasse "k5" kann bedeuten, dass es sich bei entsprechend gekennzeichneten Banknoten um Fälschungen handelt. Alle Banknoten die eine Seriennummer aufweisen die mit "X456789##1" übereinstimmt, werden entsprechend als Banknoten erkannt, die gefälscht sind und einer beispielsweise die Fälschung einer Banknote aus einer bestimmten Serie oder Emission sind.

Bei der Überprüfung von Banknoten in der Banknotenbearbeitungsmaschine 10 werden die ermittelten Seriennummern der Banknoten von der Steuereinrichtung 40 mit den in der Tabelle 200 enthaltenen Seriennummern SN verglichen. Wird beim Vergleich beispielsweise die Seriennummer 205 erkannt, d. h. eine Seriennummer, die mit "X456789##1" übereinstimmt, kann die zugeordnete Klasse 215 für die weitere Bearbeitung verwendet werden. Beispielsweise wird die Banknote, da sie durch die Klasse "k5" als Fälschung gekennzeichnet ist, über die Fortsetzung 28 des Transportsystems 23 zu einem besonderen, nicht dargestellten Ausgabefach transportiert. Zusätzlich kann die Steuereinrichtung 40 ein Warnsignal erzeugen und beispielsweise auf der Ein-/ Ausgabeeinrichtung 45 darstellen. Ebenso kann die Bearbeitung angehalten werden, wenn eine Fälschung erkannt wird.

Beispielsweise ist einer sechsten Seriennummer 206 eine Klasse 216 zugeordnet. Die Klasse 216 ist beispielsweise als "k15", "k22" und "k32" bezeichnet. Dies bedeutet, dass allen Seriennummern "Z1234567##" die Klassen "k15", "k22" und "k32" zugeordnet sind, d. h. allen Banknoten deren Seriennummer der bekannten Seriennummer 206 entspricht, wobei die letzte und zweitletzte Stelle der Seriennummer beliebig sein kann. Die Klasse "k15" kann einen Gesamtzustand mit starken Gebrauchsspuren beschreiben, d. h. Banknoten, die z. B. Beschädigungen wie Risse aufweisen oder bei denen Teile fehlen. Die Klasse "k22" kann ein bestimmtes Land, eine Druckstätte oder einen Herkunftsort der Banknoten beschreiben. Die Klasse "k32" kann eine bestimmte Serie oder Emission der entsprechenden Banknote beschreiben. Alle Banknoten die eine Seriennummer aufweisen die mit "Z1234567##" übereinstimmt, werden entsprechend als Banknoten erkannt, die einen schlechten Gesamtzustand aufweisen, von einem bestimmten Ort stammen und einer bestimmten Serie oder Emission angehören.

Bei der Überprüfung von Banknoten in der Banknotenbearbeitungsmaschine 10 werden die ermittelten Seriennummern der Banknoten von der Steuereinrichtung 40 mit den in der Tabelle 200 enthaltenen Seriennummern SN verglichen. Wird beim Vergleich beispielsweise die Seriennummer 206 erkannt, d. h. eine Seriennummer, die mit "X1234567##" übereinstimmt, kann die zugeordnete Klasse 216 für die weitere Bearbeitung verwendet werden. Beispielsweise wird die Banknote, da sie durch die Klasse "k15" als Banknote mit starken Gebrauchsspuren gekennzeichnet ist, über die Fortsetzung 28 des Transportsystems 23 zu dem Schredder transportiert und zerstört.

Die zugeordneten Klassen CL können auch gewisse Zusammenhänge aufweisen. Beispielsweise die der sechsten Seriennummer 206 zugeordneten Klassen k15", "k22" und "k32" können einen derartigen Zusammenhang aufweisen. Beispielsweise weisen die Klassen "k22" und "k32" den Zusammenhang auf, dass sie von einem bestimmten Ort "k22" stammen, also einem die Banknote herausgebenden Land, und einer bestimmten Serie oder Emission "k32" der Banknoten dieses Lands angehören. Ebenso können die Klassen "k15" und "k22" einen Zusammenhang aufweisen. Da bekannt ist, zu welchem Zeitpunkt eine bestimmte Serie oder Emission "k32" herausgegeben wurde, kann nach Ablauf einer bestimmten Zeit davon ausgegangen werden, dass entsprechende Banknoten einen schlechten Gesamtzustand aufweisen.

Beispielsweise ist einer n-ten Seriennummer 20n eine Klasse 21n zugeordnet. Die Klasse 21n ist beispielsweise als "kA" bezeichnet. Dies bedeutet, dass allen Seriennummern "#23456*" die Klassen "kA zugeordnet ist, d. h. allen Banknoten deren Seriennummer der bekannten Seriennummer 20n entspricht, wobei die zweite bis sechste Position der Seriennummer "23456" entspricht, wohingegen die erste und alle Stellen nach der sechsten Stelle der Seriennummer beliebig sein können. Die Klasse "kA" kann eine, beispielsweise von der Bedienperson mittels der Ein-/ Ausgabeeinrichtung 45, frei definierte Klasse sein. Die Klasse "kA" kann aus einer beliebigen Kombination verfügbarer Klassen bestehen, z. B. "kA"=("k11" "k2" "k3"). Es ist aber auch möglich, dass die Bedienperson weitere Eigenschaften zuordnet. Diese weiteren Eigenschaften können auch mit den verfügbaren Klassen kombiniert werden. Beispielsweise kann der Klasse "k4", die Raub- oder Erpressergeld bezeichnet, die Information zugeordnet werden, welche Polizeidienststelle über das Auftauchen der Banknote zu informieren ist.

Bei der Überprüfung von Banknoten in der Banknotenbearbeitungsmaschine 10 werden die ermittelten Seriennummern der Banknoten von der Steuereinrichtung 40 mit den in der Tabelle 200 enthaltenen Seriennummern SN verglichen. Wird beim Vergleich beispielsweise die Seriennummer 20n erkannt, d. h. eine Seriennummer, die mit "#23456*" übereinstimmt, erfolgt die weitere Bearbeitung entsprechend den der Klasse "kA" zugeordneten Klassen oder Eigenschaften.

Figur 3 zeigt eine schematische Darstellung eines prinzipiellen Aufbaus einer beispielhaften Ausführungsform eines Netzwerks für den Anschluss von Banknotenbearbeitungsmaschinen, wie in Figur 1 dargestellt.

An das Netzwerk 60 können eine oder mehrere Banknotenbearbeitungsmaschinen 10 angeschlossen sein, deren Aufbau oben genauer beschrieben ist. Über das Netzwerk 60, z. B. ein drahtgebundenes und/ oder drahtloses Telefonnetz, ein lokales Netzwerk, das Internet usw., sind die Banknotenbearbeitungsmaschinen 10 mit einer Zentrale 100 verbunden, die z. B. aus einem Datenspeicher bzw. einer Datenbank besteht, also z. B. einen Computer 105 mit einem Speichermedium 100 aufweist. Das Netzwerk 60 kann auch in anderer Weise realisiert sein, z. B. drahtloses Netzwerk oder als Netzwerk, das Daten über das Stromversorgungsnetz zur Verfügung stellt.

Zur Entlastung der Zentrale 100 kann es vorgesehen sein, dass weitere Zentralen 100', oder zumindest Datenspeicher, mit dem Netzwerk 60 verbunden sind. Die weiteren Zentralen 100' können sich beispielsweise in verschiedenen Ländern befinden, um die Belastung der Zentrale 100 durch Anfragen von Banknotenbearbeitungsmaschinen 10 zu verteilen und damit zu reduzieren. Dadurch ist eine schnellere Bearbeitung der Anfragen möglich. Zusätzlich kann in den jeweiligen Ländern z. B. eine Kommunikation in der jeweiligen Landessprache angeboten werden, wodurch sich eine Vereinfachung ergibt. Üblicher Weise werden die weiteren Zentralen 100' von Datenspeichern gebildet, die dem Datenspeicher der Zentrale 100 entsprechen. Die Daten bzw. die Tabelle des Datenspeichers der weiteren Zentralen 100' werden dann zu bestimmten Zeitpunkten zu der Zentrale 100 übertragen, die alle Daten bzw. Tabellen abgleichen und konsolidieren kann. Die derart aktualisierten Daten bzw. Tabellen können danach an alle weiteren Zentralen 100' verteilt werden, welche die aktualisierten Daten bzw. Tabellen den Banknotenbearbeitungsmaschinen 10 zur Verfügung stellen.

Die Banknotenbearbeitungsmaschinen 10 können einzeln über das Netzwerk 60 mit der Zentrale 100 verbunden sein, es können aber auch mehrere Banknotenbearbeitungsmaschinen 10, die direkt oder über einen Datenbus oder ein lokales Netzwerk 111 miteinander verbunden sind, über eine Banknotenbearbeitungsmaschine 10' und das Netzwerk 60 mit der Zentrale 100 verbunden sein. Die mit dem Netzwerk 60 verbundene Banknotenbearbeitungsmaschine 10' nimmt dabei den Datenaustausch bzw. die Kommunikation mit der Zentrale 100 vor. Die von der Zentrale 100 stammenden Daten bzw. Tabellen werden über das lokale Netzwerk 111 den anderen Banknotenbearbeitungsmaschinen 10 zur Verfügung gestellt. In gleicher Weise werden von den anderen Banknotenbearbeitungsmaschinen 10 stammenden Daten oder Tabellen über das lokale Netzwerk 111 an die Banknotenbearbeitungsmaschine 10' geleitet, damit diese die Daten bzw. Tabellen an die Zentrale 100 weiterleiten kann. Werden die Banknotenbearbeitungsmaschinen 11 direkt miteinander verbunden, kann eine kaskadenartige Verbindung vorgesehen werden. Dadurch ist eine besonders schnelle Weitergabe der Daten oder Tabellen möglich, da die Weitergabe in der Kaskade lawinenartig erfolgen kann. Das lokale Netzwerk 111 kann auch als drahtloses Netzwerk oder als Netzwerk, das Daten über das Stromversorgungsnetz zur Verfügung stellt, realisiert sein.

Die Banknotenbearbeitungsmaschinen 10,10' können einem bestimmten Betreiber 110, beispielsweise einer bestimmten Bank, einem Werttransportunternehmen usw., zugeordnet sein. Zur Überwachung der einzelnen Banknotenbearbeitungsmaschinen 10,10' kann der Betreiber 110 über eine Überwachungseinheit 112 verfügen, z. B. einen Computer. Der Computer 112 ist über eine entsprechende Schnittstelle mit dem Netzwerk 60 und der Zentrale 100 verbunden. Dadurch kann der Betreiber 110 den Computer 112 auch dazu verwenden, einen Austausch von Daten oder Tabellen zwischen Zentrale 100 und Banknotenbearbeitungsmaschinen 10,10' zu bewirken, oder Tabellen zu bearbeiten. Ebenso ist es möglich, dass der Computer 112 mit dem lokalen Netzwerk 111 oder den einzelnen Banknotenbearbeitungsmaschinen 10,10' direkt verbunden ist. Es ist offensichtlich, dass ein Betreiber 110 verschiedene Banknotenbearbeitungsmaschinen 10 betreiben kann, die in der beschriebenen Weise über eine einzige Banknotenbearbeitungsmaschine 10' und das Netzwerk 60 mit der Zentrale 100 verbunden sind. Ebenso können die einzelnen Banknotenbearbeitungsmaschinen 10,10' des Betreibers 110 direkt über das Netzwerk 60 mit der Zentrale 100 in Verbindung stehen. Es ist auch möglich, dass das lokale Netzwerk 111 über eine entsprechende Schnittstelle an das Netzwerk 60 angebunden ist.

Auch in der Zentrale 100 kann eine Banknotenbearbeitungsmaschine 10 vorhanden sein, um bestimmte, nur in der Zentrale 100 vorliegende Banknoten zu bearbeiten, z. B. um die Seriennummern der bestimmten Banknoten zu erfassen oder Daten bzw. Tabellen zu bearbeiten. Zudem kann der Computer 105 der Zentrale 100 verwendet werden, entsprechende Daten einzugeben bzw. zu bearbeiten. Gleiches gilt für den Computer 50 der Banknotenbearbeitungsmaschine 10. An der Banknotenbearbeitungsmaschine 10 kann eine Bearbeitung der Daten bzw. Tabellen auch mittels der Ein-/ Ausgabeeinrichtung 45 erfolgen. Dazu kann beispielsweise ein besonderer Betriebsmodus vorgesehen sein. Bei der Bearbeitung der Daten bzw. Tabellen können vorhandene Seriennummern und zugeordneten Klassen gestrichen oder die zugeordneten Klassen können verändert werden. Ebenso können neue Seriennummern mit zugehörigen Klassen aufgenommen werden.

Bisher wurde von einer Übermittlung der Zuordnungen von Seriennummern SN und Klassen CL zu der oder den Banknotenbearbeitungsmaschinen 10 über ein Netzwerk 60 ausgegangen. Es sind jedoch beliebige andere Arten der Übermittlung geeignet, beispielsweise mittels eines Datenträgers 65, z. B. eines optischen Speichers oder eines Festkörperspeichers, dessen Daten von der oder den Banknotenbearbeitungsmaschinen 10 gelesen werden können 65'. Ebenso ist es möglich, den Austausch der Tabellen nicht über die Zentrale vorzunehmen. Die Tabellen können beispielsweise auch von einer Banknotenbearbeitungsmaschine 10 auf eine oder mehrere andere Banknotenbearbeitungsmaschinen 10 übertragen werden.

Bisher wurde die Zuordnung von Seriennummern SN und Klassen CL anhand einer Liste oder Tabelle beschrieben. Es ist aber offensichtlich, dass jede beliebige andere Art der Zuordnung einer oder mehrerer Klassen zu den bekannten Seriennummern SN verwendet werden kann. Beispeisweise können die Seriennummern SN und Klassen CL in einer Script-Datei enthalten sein, die z. B. im XML-Format erstellt ist.

Ebenso ist es möglich, statt einer Liste oder Tabelle mehrere Listen oder Tabellen zu verwenden. Diese mehreren Tabellen können einzeln erzeugt werden oder aus einer Gesamttabelle generiert werden. Beispielsweise kann zur Generierung die Klasse CL verwendet werden, um z. B. bekannte Seriennummern SN in verschiedene Tabellen aufzuteilen. Wird z. B. nach den Klassen "k21" und "k22" unterschieden, können zwei Tabellen für bekannte Seriennummern SN generiert werden, die aus bestimmten Ländern stammen.

Bei der Bearbeitung von Banknoten BN ist es möglich, die bekannten Seriennummern SN aller verwendeten Listen oder Tabellen mit der bei der Bearbeitung ermittelten Seriennummer zu vergleichen, es können aber auch nur bestimmte Listen oder Tabellen verwendet werden. Beispielsweise kann bei der Bearbeitung nur eine der wie oben beschrieben generierten Tabellen verwendet werden, z. B. die Tabelle welche die bekannten Seriennummern SN enthält, welchen die Land-Klasse "k21" zugeordnet ist, da z. B. nur Banknoten der Währung dieses Lands bearbeitet werden.

Die Erzeugung bzw. Generierung und Auswahl der Tabellen kann beispielsweise mittels der Ein-/Ausgabeeinrichtung 45 oder dem Computer 50 erfolgen. Dazu können, wie oben beschrieben, besondere Betriebsmodi vorgesehen sein. Ebenso ist die Erzeugung bzw. Generierung an einem anderen Ort möglich, z. B. der Zentrale 100 oder 100'.

## Patentansprüche

1. Verfahren für die Bearbeitung von Banknoten mittels einer Banknotenbearbeitungsmaschine (10), bei dem Seriennummern der zu bearbeitenden Banknoten (BN) mittels einer Sensoreinrichtung (30) und einer Steuereinrichtung (40) ermittelt und mit in einem nichtflüchtigen Speicher (41) gespeicherten Seriennummern (SN) verglichen werden, um die Bearbeitung der Banknoten (BN) in der Banknotenbearbeitungsmaschine (10) zu steuern, mit den nachfolgenden durch die Steuereinrichtung (40) durchgeführten Verfahrensschritten:
Festlegung mehrerer Klassen (CL), die jeweils mindestens eine Eigenschaft von Banknoten charakterisieren,
Zuordnung mindestens einer der Klassen (CL) zu mehreren Seriennummern (SN), wobei ein Bereich für die mehreren Seriennummern durch Verwendung von Platzhaltern definiert wird, um der mit der jeweiligen Seriennummer (SN) aus dem Bereich versehenen Banknote mindestens eine Eigenschaft zuzuordnen,
Speicherung der jeweiligen Seriennummer (SN) sowie der zugeordneten Klasse oder Klassen (CL), und
Steuerung der Bearbeitung der Banknoten (BN) in der Banknotenbearbeitungsmaschine (10) mittels der gespeicherten, den jeweiligen Seriennummern (SN) zugeordneten Klassen (CL).

2. Verfahren nach Anspruch 1, **dadurch gekennzeichnet, dass** eine oder mehrere Tabellen (200) durch die Steuereinrichtung (40) erzeugt werden, in denen Seriennummern (SN) jeweils mindestens eine Klasse (CL) zugeordnet ist.

3. Verfahren nach Anspruch 2, **dadurch gekennzeichnet, dass** bei der Bearbeitung eine oder mehrere der Tabellen (200) durch die Steuereinrichtung (40) ausgewählt und für die Steuerung der Bearbeitung in der Banknotenbearbeitungsmaschine (10) berücksichtigt werden.

4. Verfahren nach einem der Ansprüche 1 bis 3, **dadurch gekennzeichnet, dass** bei der Bearbeitung der Banknoten (BN) in der Banknotenbearbeitungsmaschine (10) weitere Eigenschaften der Banknoten mittels der Sensoreinrichtung (30) erfasst und zur Steuerung der Bearbeitung der Banknoten (BN) von der Steuereinrichtung (40) verwendet werden.

5. Verfahren nach Anspruch 4, **dadurch gekennzeichnet, dass** die weiteren durch die Sensoreinrichtung (30) erfassten Eigenschaften der Banknoten als entsprechende Klassen (CL) den Seriennummern (SN) der jeweiligen Banknoten (BN) von der Steuereinrichtung (40) zugeordnet werden.

6. Verfahren nach einem der Ansprüche 1 bis 5, **dadurch gekennzeichnet, dass** die Steuereinrichtung (40) für die Klassen (CL) Bereiche definiert, insbesondere durch die Darstellung der Klassen (CL) mittels Ziffern und/ oder alphanumerische Zeichen und die Verwendung von Platzhaltern.

7. Verfahren nach einem der Ansprüche 1 bis 6, **dadurch gekennzeichnet, dass** die für die Bearbeitung von Banknoten (BN) an einem bestimmten Ort (10; 10'; 50; 65; 100; 100'; 110; 105; 112) vorgenommene Zuordnung von einer oder mehreren Klassen (CL) zu mehreren Seriennummern (SN) mittels Netzwerk oder Datenträger (60; 65, 65') an einen oder mehrere andere Orte (10; 10'; 50; 65; 100; 100'; 110; 105; 112) übertragen wird, für die Bearbeitung von Banknoten (BN) an dem einen oder den mehreren anderen Orten (10; 10'; 50; 65; 100; 100'; 110; 105; 112).

8. Verfahren nach einem der Ansprüche 1 bis 7, **dadurch gekennzeichnet, dass** die Zuordnung von einer oder mehreren Klassen (CL) zu mehreren Seriennummern (SN) durch die Steuereinrichtung (40) in einer Script-Datei, insbesondere im XML-Format, erfolgt.

## Claims

1. A method for the processing of bank notes by means a bank-note processing machine (10), wherein serial numbers of the bank notes (BN) to be processed are ascertained by means of a sensor device (30) and a control device (40) and compared with serial numbers (SN) stored in a non-volatile memory (41), in order to control the processing of the bank notes (BN) in the bank-note processing machine (10), having the following method steps carried out by the control device (40):
specifying a plurality of classes (CL) which respectively characterize at least one property of bank notes,
associating at least one of the classes (CL) with a plurality of serial numbers (SN), wherein a range for the plurality of serial numbers is defined by employing placeholders, in order to associate at least one property with the bank note provided with the respective serial number (SN),
storing the respective serial number (SN) and the associated class or classes (CL), and
controlling the processing of the bank notes (BN) in the bank-note processing machine (10) by means of the stored classes (CL) associated with the respective serial numbers (SN).

2. The method according to claim 1, **characterized in that** there are produced by the control device (40) one or a plurality of tables (200) in which serial numbers (SN) respectively have at least one class (CL) associated therewith.

3. The method according to claim 2, **characterized in that**, upon processing, one or a plurality of of the tables (200) are selected by the control device (40) and taken into consideration for the control of the processing in the bank-note processing machine (10).

4. The method according to any of claims 1 to 3, **characterized in that**, upon the processing of the bank notes (BN) in the bank-note processing machine (10), further properties of the bank notes are captured by means of the sensor device (30) and employed by the control device (40) for controlling the processing of the bank notes (BN).

5. The method according to claim 4, **characterized in that** the further properties of the bank notes that are captured by the sensor device (30) are associated by the control device (40) with the serial numbers (SN) of the respective bank notes (BN) as corresponding classes (CL).

6. The method according to any of claims 1 to 5, **characterized in that** the control device (40) defines ranges for the classes (CL), in particular through the representation of the classes (CL) by means of digits and/or alphanumeric characters and the employment of placeholders.

7. The method according to any of claims 1 to 6, **characterized in that** the association of one or a plurality of classes (CL) with a plurality of serial numbers (SN) that has been performed for the processing of bank notes (BN) at a certain place (10; 10'; 50; 65; 100; 100'; 110; 105; 112) is transferred by means of network or data carrier (60; 65, 65') to one or a plurality of other places (10; 10'; 50; 65; 100; 100'; 110; 105; 112), for the processing of bank notes (BN) at said one or said plurality of other places (10; 10'; 50; 65; 100; 100'; 110; 105; 112).

8. The method according to any of claims 1 to 7, **characterized in that** the association of one or a plurality of classes (CL) with a plurality of serial numbers (SN) is effected by the control device (40) in a script file, in particular in the XML format.

## Revendications

1. Procédé destiné au traitement de billets de banque au moyen d'une machine de traitement de billets de banque (10), dans lequel des numéros de série des billets de banque (BN) à traiter sont déterminés au moyen d'un dispositif capteur (30) et d'un dispositif de commande (40) et sont comparés avec des numéros de série (SN) mémorisés dans une mémoire non volatile (41), afin de commander le traitement des billets de banque (BN) dans la machine de traitement de billets de banque (10), comprenant les étapes de procédé suivantes exécutées par le dispositif de commande (40):
établissement de plusieurs classes (CL) qui caractérisent respectivement au moins une propriété de billets de banque,
affectation d'au moins une des classes (CL) à plusieurs numéros de série (SN), une zone pour les plusieurs numéros de série étant définie par utilisation d'espaces réservés afin d'affecter au moins une propriété au billet de banque pourvu du numéro de série (SN) de la zone,
mémorisation du numéro de série (SN) respectif ainsi que de la classe ou des classes affectée(s) (CL), et
commande du traitement des billets de banque (BN) dans la machine de traitement de billets de banque (10) au moyen des classes (CL) affectées aux numéros de série (SN) respectifs mémorisés.

2. Procédé selon la revendication 1, **caractérisé en ce qu'**une ou plusieurs tables (200) sont générées par le dispositif de commande (40), dans lesquelles, à des numéros de série (SN), respectivement au moins une classe (CL) est affectée.

3. Procédé selon la revendication 2, **caractérisé en ce que**, lors du traitement, une ou plusieurs des tables (200) sont sélectionnées par le dispositif de commande (40) et prises en compte pour le traitement dans la machine de traitement de billets de banque (10).

4. Procédé selon une des revendications de 1 à 3, **caractérisé en ce que**, lors du traitement des billets de banque (BN) dans la machine de traitement de billets de banque (10), des autres propriétés des billets de banque sont saisies au moyen du dispositif capteur (30) et utilisées par le dispositif de commande (40) pour la commande du traitement de billets de banque (BN).

5. Procédé selon la revendication 4, **caractérisé en ce que** les autres propriétés des billets de banque saisies par le dispositif capteur (30) sont, en tant que classes (CL) correspondantes, affectées par le dispositif de commande (40) aux numéros de série (SN) des billets de banque (BN) respectifs.

6. Procédé selon une des revendications de 1 à 5, **caractérisé en ce que** le dispositif de commande (40) définit pour les classes (CL) des zones, en particulier par la représentation des classes (CL) au moyen de chiffres et/ou de caractères alphanumériques et l'utilisation d'espaces réservés.

7. Procédé selon une des revendications de 1 à 6, **caractérisé en ce que** l'affectation d'une ou de plusieurs classes (CL) à plusieurs numéros de série (SN) effectuée pour le traitement de billets de banque (BN) à un certain endroit (10; 10'; 50; 65; 100; 100'; 110; 105; 112) est transmise au moyen d'un réseau ou d'un support de données (60; 65, 65') à un ou plusieurs autres endroits (10; 10'; 50; 65; 100; 100'; 110; 105; 112) pour le traitement de billets de banque (BN) à l'un ou les plusieurs autres endroits (10; 10'; 50; 65; 100; 100'; 110; 105; 112).

8. Procédé selon une des revendications de 1 à 7, **caractérisé en ce que** l'affectation, par le dispositif de commande (40), d'une ou de plusieurs classes (CL) à plusieurs numéros de série (SN) a lieu dans un fichier script, en particulier dans un format XML.
